# EUROPEAN PATENT SPECIFICATION

(11) **EP 1 800 825 B1**
(45) Date of publication and mention of the grant of the patent: **01.10.2008**
(21) Application number: 05112451.9
(22) Date of filing: 20.12.2005
(51) Int. Cl.: B29C 33/52, B29C 70/44

(54) **A method of manufacturing an integral article comprising a fiber-reinforced composite material, and a tool assembly for making the same**
Verfahren zur Herstellung eines integralen Formteils aus faserverstärktem Verbundwerkstoff und Werkzeugsystem zur Herstellung desselben
Procédé pour la fabrication d'un article composite renforcé par des fibres et ensemble outil pour sa fabrication

(43) Date of publication of application: 27.06.2007
(73) Proprietor: SAAB AB, 581 88 Linköping (SE)
(72) Inventor: GREIS, Peter, 582 33, LINKÖPING (SE); KROGAGER, Max, 582 42, LINKÖPING (SE); PETERSSON, Mikael, 585 90, LINKÖPING (SE); WEIDMANN, Björn, 590 31, BORENSBERG (SE); ALENBY, Torbjörn, 587 37, LINKÖPING (SE)
(74) Representative: Winblad, Hans Peter

(56) References cited:
- US-B1- 6 921 503
- PATENT ABSTRACTS OF JAPAN vol. 010, no. 238 (M-508), 16 August 1986 (1986-08-16) & JP 61 069436 A (HITACHI ZOSEN CORP), 10 April 1986 (1986-04-10)
- PATENT ABSTRACTS OF JAPAN vol. 016, no. 321 (M-1279), 14 July 1992 (1992-07-14) & JP 04 090330 A (MITSUBISHI PLASTICS IND LTD), 24 March 1992 (1992-03-24)
- PATENT ABSTRACTS OF JAPAN vol. 007, no. 025 (M-190), 2 February 1983 (1983-02-02) & JP 57 181819 A (TOYOTA JIDOSHA KOGYO KK), 9 November 1982 (1982-11-09)

## Description

### FIELD OF THE INVENTION

The present invention relates to a method of manufacturing an integral article comprising a fiber-reinforced composite material, such as a fuel tank, according to the preamble of claim 1. The invention also relates to a tool assembly for the manufacture of such an article according to the preamble of claim 6.

### BACKGROUND OF THE INVENTION

The manufacture of, for example, a hollow or shell-like article of fiber-reinforced composite material, such as a fuel tank for a vehicle or an aircraft, has so far required very strong and expensive inner tool components to be able to withstand high vacuum forces applied thereto which are necessary to obtain a poreless composite laminate during the manufacture. This is especially true when forming an integral fuel tank, i.e. a tank in one single piece, to keep the manufacturing costs low. Also, the tool components used are often difficult to remove from the finished formed article. A desired and ideal choice of material for such inner tool components would be a cellular plastic material, as it is extremely inexpensive, has a low density and would easily be dissolved after thermosetting/curing of the product. However, cellular plastic material has a very low resistance to pressure and would easily collapse should vacuum be applied to a vacuum bag surrounding a body of cellular plastic.

JP 61069436 discloses a method and a tool assembly according to the preambles of claims 1 and 6.

### SUMMARY OF THE INVENTION

It is an object of the present invention to suggest a method which would make it possible to use a cellular plastic material as an inner forming tool when making a hollow or a shell-like article from a fiber-reinforced composite material. To this end hollow or a shell-like article from a fiber-reinforced composite material. To this end the method of the invention is characterized by the steps set forth in the accompanying independent claim 1.

Due to the fact that an airtight sheet of a flexible material is applied to the tool body so as to fully encompass and seal the same, the air pressure within the airtight sheet will efficiently balance the air pressure on the outside of the vacuum bag when the latter is applying a vacuum pressure onto the composite material, i.e. between the two air tight layers, thereby preventing the cellular plastic material of the tool body to collapse as it is not exposed for any compressive pressure. This will allow for a very simple and inexpensive manufacturing of fully closed, integral articles of composite materials where the inner cellular plastic tool body may be left in situ as a "fly away tool".

In case the article to be produced is a fuel tank, a hole may be drilled through the cured composite material, through which a suitable solvent, such as acetone, is poured so as to rapidly and easily dissolve the cellular plastic material within the airtight sheet. The dissolved cellular plastic material may then be drained through the drilled hole, and the airtight sheet can also be removed through the hole. The hole may then be used for a fuel filler connection of the tank.

The present invention also includes a tool assembly for carrying out the method of the invention as described herein and defined in the independent claim 6..

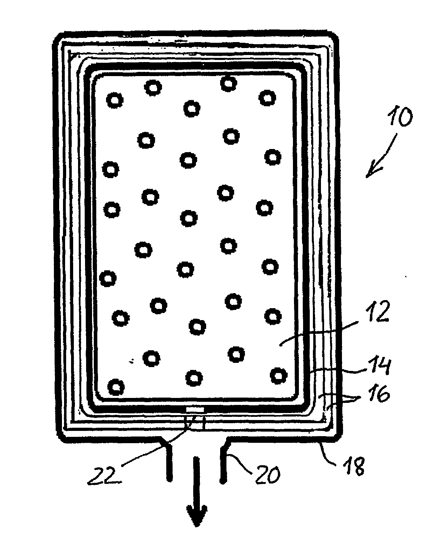

The invention will be described more in detail below in conjunction with the attached drawing.

### BRIEF DESCRIPTION OF THE DRAWING

The single figure schematically discloses a cross-sectional view of a tool assembly of the present invention for making an integral, hollow article of a fiber-reinforced composite material.

### DETAILED DESCRIPTION OF PREFERRED EMBODIMENTS

In the drawing figure, 10 generally denotes a tool assembly of the invention used for making an integral, shell-like article of a fiber-reinforced composite material. The tool assembly comprises an inner tool body 12 of a soft cellular plastic material having an outer configuration that substantially corresponds to an inner configuration of the composite material article to be manufactured.

The procedure for manufacturing the article is as follows: first, an airtight sheet 14 of a flexible material, such as "TOOL TECH", (RTM) is applied onto the outer surface of the tool body 12 to fully encompass and seal the same. Then, a plurality of layers 16 of fiber-reinforced composite material, such as carbon fiber epoxy, having the fibers alternately oriented in various directions are applied onto the outer surface of the flexible airtight sheet 14 until a shell of sufficient thickness is obtained. Thereafter, an airtight vacuum bag 18 having an opening or evacuation connection 20 is applied thereto so as to fully encompass the layers 16 of the composite material. The vacuum bag 18 is then evacuated by a vacuum source (not shown) through the connection 20, so that all air between the airtight bag 18 and the airtight sheet 14 is disposed of, thereby compressing the layers 16 of the composite material to a poreless, air-free shell. Owing to the fact that the airtight sheet 14 is sealing the tool body 12 of porous cellular plastic material, the air pressure within the airtight sheet 14 will efficiently balance the air pressure on the outside of the vacuum bag 18 when the latter is applying a vacuum pressure onto the composite material 16, thereby preventing the cellular plastic material of the tool body 12 from collapsing as it is not exposed for any substantial compressive pressure. The tool assembly 10 is then subjected to a heat treatment in order to cure the layers 16 of composite material, and the vacuum bag 18 is removed from the thus hardened integral article. Depending on the intended use of the finished article, the tool body 12 and the airtight sheet 14 may either be left in situ as a so called "fly away tool", or, in case the article to be produced is a container or a fuel tank, a hole 22 may be drilled through the cured composite material 16, through which a solvent, such as acetone, is poured so as to rapidly and easily dissolve the cellular plastic material of the tool body 12 within the airtight sheet 14. The dissolved cellular plastic material may then be drained through the hole 22, and the airtight sheet 14 can also be removed through the hole 22. The hole 22 may then be used for a fuel filler connection of the tank.

The invention is not limited to the embodiment described above but may be modified within the scope of the accompanying claims.

## Claims

1. A method of manufacturing an integral article comprising a fiber-reinforced composite material, comprising the steps of:
- providing an inner tool body (12) of a cellular plastic material having an outer configuration substantially corresponding to an inner configuration of the composite material article to be manufactured;
- applying onto the outer surface of the tool body (12) an airtight sheet (14) of a flexible material fully encompassing the tool body (12); **characterized by** the steps of
- applying onto the outer surface of the flexible airtight sheet (14) a plurality of layers (16) of fiber-reinforced composite material;
- applying onto the outer layer of the composite material (16) an airtight vacuum bag (18);
- evacuating the air enclosed within the vacuum bag (18), i.e. between the vacuum bag (18) and the flexible airtight sheet (14);
- curing the composite material (16); and
- removing the vacuum bag (18) from the thus formed article.

2. The method of claim 1, comprising the further steps of:
- boring at least one hole (22) in the composite material (16);
- pouring a solvent into the at least one hole (22) to dissolve the cellular plastic tool body (12); and
- draining the dissolved cellular plastic material from the interior of the article.

3. The method of claim 2, comprising the further step of removing the airtight sheet (14) from the article through the at least one hole (22).

4. The method of claim 2 or 3, wherein the solvent is acetone.

5. The method of anyone of claims 2-4, wherein the article produced is a fuel tank.

6. A tool assembly (10) for the manufacture of an integral article of a fiber-reinforced composite material, comprising an inner tool body (12) of a cellular plastic material, and a flexible airtight sheet (14) fully encompassing the tool body (12), **characterized by** an airtight vacuum bag (18) configured to encompass a shell (16) of a fiber-reinforced composite material laid onto the airtight sheet (14), said vacuum bag (18) having at least one evacuation connection (20) for the evacuation of air enclosed within the vacuum bag (18), i.e. between the vacuum bag (18) and the flexible airtight sheet (14).

## Patentansprüche

1. Verfahren zum Herstellen eines einstückigen Artikels, umfassend ein faserverstärktes Verbundmaterial, umfassend die folgenden Schritte:
Schaffen eines inneren Werkzeugkörpers (12) eines zellenförmigen Kunststoffmaterials mit einer äußeren Gestalt, die im Wesentlichen einer inneren Gestalt des herzustellenden Verbundmaterialartikels entspricht;
Anwenden eines luftdichten Bogens (14) eines flexiblen Materials auf die äußere Oberfläche des Werkzeugkörpers (12), der den Werkzeugkörper (12) vollständig umschließt; **gekennzeichnet durch** die folgenden Schritte:
Aufbringen einer Mehrzahl von Schichten (16) von faserverstärktem Verbundmaterial auf die äußere Oberfläche des flexiblen, luftdichten Bogens (14);
Aufbringen eines luftdichten Vakuumsacks (18) auf die äußere Schicht des Verbundmaterials (16);
Abpumpen der innerhalb des Vakuumsacks (18), d.h. zwischen dem Vakuumsack (18) und dem flexiblen, luftdichten Bogen (14), eingeschlossenen Luft;
Aushärten des Verbundmaterials (16); und
Entfernen des Vakuumsacks von dem **dadurch** geformten Artikel.

2. Verfahren nach Anspruch 1, umfassend die folgenden weiteren Schritte:
Bohren zumindest eines Lochs (22) in das Verbundmaterial (16);
Gießen einer Lösung in das zumindest eine Loch (22), um den zellenförmigen Kunststoffwerkzeugkörper (12) aufzulöten; und
Ableiten des gelösten zellenförmigen Kunststoffmaterials vom Inneren des Artikels.

3. Verfahren nach Anspruch 2, umfassend den weiteren Schritt des Entfernens des luftdichten Bogens (14) von dem Artikel durch das zumindest eine Loch (22).

4. Verfahren nach Anspruch 2 oder 3, wobei die Lösung Aceton ist.

5. Verfahren nach einem der Ansprüche 2 bis 4, wobei der hergestellte Artikel ein Treibstofftank ist.

6. Werkzeugzusammenstellung (10) zur Herstellung eines einstückigen Artikels eines faserverstärkten Verbundmaterials, umfassend einen inneren Werkzeugkörper (12) eines zellenförmigen Kunststoffmaterials und einen flexiblen, luftdichten Bogen (14), der den Werkzeugkörper (12) vollständig umschließt, **gekennzeichnet durch** einen luftdichten Vakuumsack (18), der zusammengestellt ist, um eine Hülle (16) eines faserverstärkten Verbundmaterials, die auf den luftdichten Bogen (14) gelegt ist, zu umschließen, wobei der Vakuumsack (18) zumindest eine Abpumpverbindung (20) zum Abpumpen von innerhalb des Vakuumsacks (18), d.h. zwischen dem Vakuumsack (18) und dem flexiblen, luftdichten Bogen (14), eingeschlossener Luft.

## Revendications

1. Méthode de fabrication d'un article intégré comprenant un matériau composite renforcé par des fibres, comprenant les étapes consistant à :
- fournir un corps d'outil interne (12) en un matériau plastique cellulaire ayant une configuration externe correspondant sensiblement à une configuration interne de l'article en matériau composite devant être fabriqué ;
- appliquer sur la surface externe du corps d'outil (12) une feuille étanche (14) d'un matériau souple couvrant complètement le corps d'outil (12) ; **caractérisé par** les étapes consistant à
- appliquer sur la surface externe de la feuille souple étanche à l'air (14) une pluralité de couches (16) de matériau composite renforcé par des fibres ;
- appliquer sur la couche externe du matériau composite (16) un sac sous vide étanche à l'air (18) ;
- évacuer l'air enfermé à l'intérieur du sac sous vide (18), à savoir, entre le sac sous vide (18) et la feuille souple étanche à l'air (14) ;
- durcir le matériau composite (16) ; et
- retirer le sac sous vide (18) de l'article ainsi formé.

2. Méthode selon la revendication 1, comprenant les étapes suivantes consistant à :
- aléser au moins un trou (22) dans le matériau composite (16) ;
- verser un solvant dans l'au moins un trou (22) pour dissoudre le corps de l'outil en plastique cellulaire (12) ; et
- évacuer la matière plastique cellulaire dissoute de l'intérieur de l'article.

3. Méthode selon la revendication 2, comprenant l'étape suivante consistant à retirer la feuille étanche à l'air (14) de l'article à travers l'au moins un trou (22).

4. Méthode selon la revendication 2 ou 3, dans lequel le solvant est de l'acétone.

5. Méthode selon l'une quelconque des revendications 2 à 4, dans lequel l'article produit est un réservoir carburant.

6. Ensemble outil (10) pour la fabrication d'un article intégré en un matériau composite renforcé par des fibres, comprenant un corps d'outil interne (12) en une matière plastique cellulaire, et une feuille souple étanche à l'air (14) couvrant complètement le corps d'outil (12), **caractérisé par** un sac sous vide étanche à l'air (18) configuré pour couvrir une coque (16) en un matériau composite renforcé par des fibres disposé sur la feuille étanche à l'air (14), ledit sac sous vide (18) ayant au moins un raccord d'évacuation (20) pour l'évacuation de l'air enfermé à l'intérieur du sac sous vide (18), à savoir, entre le sac sous vide (18) et la feuille souple étanche à l'air (14).
